# EUROPEAN PATENT APPLICATION

(11) **EP 0 967 511 A1**
(43) Date of publication of application: **29.12.1999**
(21) Application number: 98111677.5
(22) Date of filing: 25.06.1998
(51) Int. Cl.: G02F 1/1335, G02F 1/133, H04M 19/08

(54) **Display device with solar cells**

(71) Applicant: ROBERT BOSCH GMBH, 70442 Stuttgart (DE)
(72) Inventor: The designation of the inventor has not yet been filed

(57) **Abstract**

The invention relates to an electrical device (1), especially a mobile phone, comprising a display (5). The display (5) comprises solar cells (10) transforming light energy entering the display (5) into electrical energy. The display (5) may thereby be a liquid crystal display comprising a first polarizing sheet (20) and a second polarizing sheet (25) with essentially orthogonal polarization direction. The liquid crystal display (5) comprises between the first polarizing sheet (20) and the second polarizing sheet (25) a layer (35) of liquid crystal elements. The liquid crystal elements of the layer (35) where not excited by an electric field are transparent and change the polarization direction of light passed through the first polarizing sheet (20), especially by about 90 degrees, such that the polarized light is passed through the second polarizing sheet (25) without essential light absorption. The solar cells (10) are arranged on a rear side (50) of the second polarizing sheet (25) opposite to the surface (15) of the liquid crystal display (5).

## Description

### Prior Art

The invention proceeds from the electrical device in accordance with the generic class of claim 1.

Electrical devices with a display are already known. From the catalogue "Bosch Mobiltelefone 1996/97. Erfrischende Ideen für unterhaltsame Verbindungen." the mobile phone "M-Com 906" comprising a display is already known.

### Advantages of the invention

The electrical device having the characterizing feature of claim 1 has the advantage that solar cells for supplying electrical energy to the device do not occupy precious area on a front surface of the device necessary for the arrangement of user keys e.g.. The solar cells instead use the same area already occupied by the display of the device.

A further advantage consists in an optimum orientation of the solar cells towards a light source when the device is oriented in a position which is most convenient during normal use, namely with the display facing upwards.

The features of the dependent patent claims enable further improvements of the invention.

It is very advantageous to arrange the solar cells on a rear side of the second polarizing sheet oposite to the surface of the display. Thereby, the solar cells have an effective protection against demolition and detrimental environment influences disturbing the absorption of light and the transformation of light energy into electrical energy at the solar cells.

It is also an advantage to arrange a partly reflecting transparent foil between the second polarizing sheet and the solar cells. Thereby, complete absorption of the light entering the display is prevented so that characters displayed on the display may be distinguished from a light reflecting background. Therefore, the legibility of characters displayed on the display is ensured.

A further advantage consists in coating the solar cells with a partly reflecting tansparent coating on a surface of the solar cells orientated to the surface of the display. On this way, a separate partly reflecting transparent foil can be saved and the mounting process of the display takes less time.

It is also very advantageous to use solar cells which are constituted of a partly transparent material, especially by amorpheous type silicon. Therefore, a partly reflecting transparent foil or a partly reflecting transparent coating on a surface of the solar cells is not necessary and may be saved. The mounting process of the display can thereby also be made in less time. A complete absorption at the solar cells of the light entering into the display is prevented by the use of the partly transparent material for the solar cells so that characters displayed on the display may be distinguished from the background of the display if this background consists of light reflecting material.

It is further advantageous, that the solar cells are arranged at the surface of the display. Thereby, an improvement of efficiency of the solar cells can be attained because the light entering into the display is directly coupled into the solar cells without passing through different sheets and layers attenuating the light intensity. Therefore, more electrical energy may be generated from the light energy entering into the display.

### Drawings

Exemplary embodiments of the invention are shown in the figures and explained in greater detail in the description below.
Figure 1 shows a mobile phone with a display,
Figur 2 a first example of a liquid crystal display according to the invention
Figure 4 a second example of a liquid crystal display according to the invention,
Figure 5 a third example of a liquid crystal display according to the invention, and

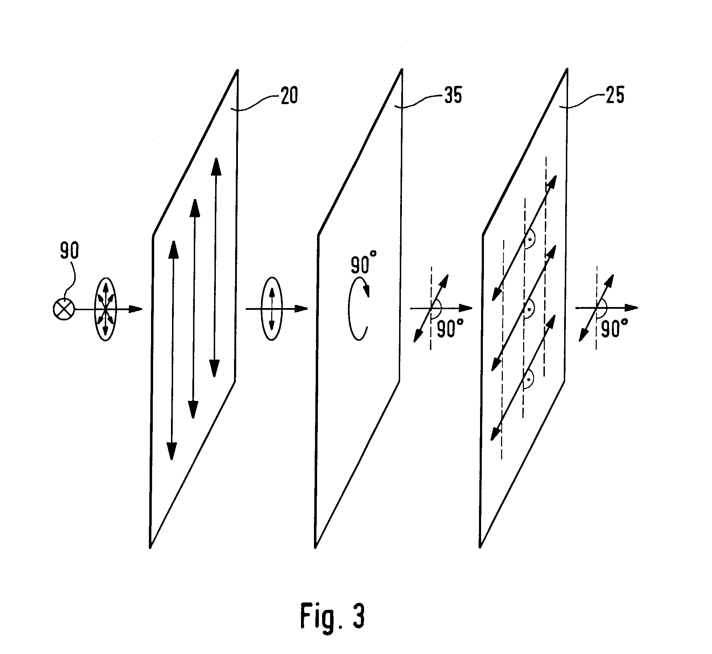

Figure 3 a schematic representation of polarization change of light entering into a liquid crystal display.

### Description

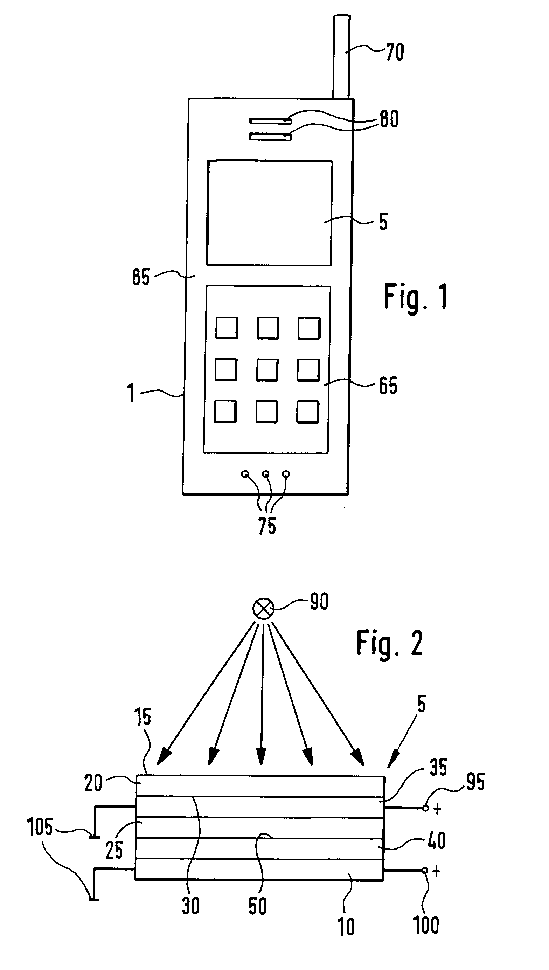

In figure 1, 1 designates a mobile phone comprising an antenna 70 and on a front surface 85 loudspeaker openings 80, microphone holes 75, a set of keys 65 and a liquid crystal display 5.

The mobile phone 1 is powered by a battery. The battery, which is not shown in figure 1, can be a non-rechargeable primary type power source, or a rechargeable secondary type power source. The use of the mobile phone 1 is limited by the capacity of the power source.

One way to overcome this problem is to use solar cells either to charge a rechargeable battery of the mobile phone 1 or to supply directly the mobile phone 1 with electrical power and hence to disconnect the battery of the mobile phone 1 from the electrical circuits of the mobile phone 1 and thereby to save battery power, sufficient ambient light conditions supposed.

When the solar cells are mounted on the front surface 85 of the mobile phone 1, it is difficult to find the required area necessary to generate sufficient energy to power the mobile phone 1, because the solar cells take up valuable surface area, which could otherwise have been used for other purposes, like a liquid crystal display 5, the set of keys 65, the loudspeaker openings 80, or the mirophone holes 75.

When the solar cells are mounted on the back surface of the mobile phone 1, not shown in figure 1, they are either not supplying electrical current, because the light is directed to the front surface of the mobile phone 1 and the back surface of the mobile phone 1 is hidden e.g. by a hand of the user, or the light is directed to the back surface of the mobile phone 1 and reaches the solar cells but the liquid crystal display 5 is hidden by e.g. a hand of the user and therefore is not readable.

The invention takes advantage of the fact, that the liquid crystal display 5 allows light transmission in areas of the liquid crystal display 5 which are not active or not black due to the optical characteristics of the liquid crytals together with polarizing surfaces of the liquid crystal display 5. In most applications, the mobile phone 1 is in a standby or idle state, where only a small fraction of the area of the liquid crystal display 5 is active or black. Because of that, most of the area of the liquid crystal display 5 will allow light transmission to solar cells placed behind the liquid crystal display 5. The solar cells will receive light when the mobile phone 1 is positioned as would be most convenient during normal use, namely facing the available light source.

In figure 2, the liquid crystal display 5 is shown in more detail. A light source 90 which could be the sun or an artificial light source as e.g. a lamp illuminates a surface 15 of the display 5 as is indicated by arrows in figure 2. At the surface 15, the liquid crystal display 5 comprises a first polarizing sheet 20. On a rear side 30 of the first polarizing sheet 20 and opposite to the surface 15 of the liquid crystal display 5, a second polarizing sheet 25 with essentially orthogonal polarization direction in comparison with the polarization direction of the first polarizing sheet 20 is arranged in the liquid crystal display 5. The liquid crystal display 5 comprises between the first polarizing sheet 20 and the second polarizing sheet 25 a layer 35 of liquid crystal elements. The layer 35 of liquid crystal elements is connected to a first plus pole 95 and to a ground potential 105. By using a control circuit, not shown in figure 2, an electric field resulting of the voltage between the first plus pole 95 and the ground potential 105 can be laid on the different liquid crystal elements in the layer 35 independently to realize a representation of characters on the liquid crystal display 5. On a rear side 50 of the second polarizing sheet 25 opposite to the surface 15 of the liquid crystal display 5, solar cells 10 are arranged. Between the second polarizing sheet 25 and the solar cells 10 a partly reflecting transparent foil 40 is arranged. A voltage is supplied from the solar cells 10 between a second plus pole 100 and the ground potential 105, if light from the light source 90 reaches the solar cells 10. The voltage between the second plus pole 100 and the ground potential 105 can be used to charge a rechargeable battery of the mobile phone 1 or to supply the mobile phone 1 directly with electrical energy, whereby the battery of the mobile phone 1 can be disconnected from the electrical circuits of the mobile phone 1, if sufficient electrical energy can be generated from the light of the light source 90 received by the liquid crystal display 5.

In figure 3 the effect of the polarizing sheets 20, 25 and the layer 35 of liquid crystal elements is shown in more detail. The light from the light source 90 with non-directed polarization enters the first polarizing sheet 20 having a vertical polarization direction. Therefore, the first polarizing sheet 20 only passes vertically polarized light from the light entered into the first polarizing sheet 20. The vertically polarized light leaving the first polarizing sheet 20 enters then the layer 35 of the liquid crystal elements. A liquid crystal element which does not experience an electric field turns the polarization direction of the entering light of about 90°. Therefore, horizontally polarized light leaves the layer 35 and enters the second polarizing sheet 25. The second polarizing sheet 25 has essentially orthogonal polarization direction in comparison with the polarization direction of the first polarizing sheet 20. Therefore, the horizontally polarized light entering the second polarizing sheet 25 is not filtered out by the second polarizing sheet 25 and leaves the second polarized sheet 25 essentially unchanged. At the partly reflecting transparent foil 40, the horizontally polarized light leaving the second polarizing sheet 25 will partly be reflected and partly pass through the partly reflecting transparent foil 40. The light reflected on the partly reflecting transparent foil 40 is also horizontally polarized and passes through the second polarizing sheet 25, the layer 35 of liquid crystal elements and the first polarizing sheet 20, thereby changing its polarization direction according to the proces described above, so that the reflected light leaves the first polarizing sheet 20 at the surface 15 of the liquid crystal display 5 in vertical polarization. The light energy passed through the partly reflecting transparent foil 40 is received by the solar cells 10 and transformed into electrical energy provided as voltage between the second plus pole 100 and the ground potential 105.

At positions of the layer 35 where liquid crystal elements are laid on the electric field between the first plus pole 95 and the ground potential 105, light entering the layer 35 will not be changed in its polarization direction and therefore will be absorbed at the second polarizing sheet 25 where only horizontally polarized light can pass through. At these positions, the liquid crystal display 5 will appear black. On this way, characters can be represented on the liquid crystal display 5 and distinguished from at least a partly reflecting background. The contrast between the representation of characters and the background of the liquid crystal display 5 is impaired because of the light absorption of the solar cells 10. The better the partly reflecting transparent foil 40 is light reflective, the less light energy reaches the solar cells 10 and can be transformed into electrical energy. The more light energy is passed through the partly reflecting transparent foil 40 and absorbed by the solar cells, the more electrical energy can be generated and the less light is reflected at the partly reflecting transparent foil 40 so the less contrast between the characters represented at the liquid crystal display 5 and the partly reflecting background of the liquid crystal display 5 can be achieved. Therefore, the degree of light reflection and the degree of light permeablility of the partly reflecting transparent foil 40 has to be chosen in a way to achieve sufficient legibility of charactes represented on the liquid crystal display 5 and a sufficient amount of light energy received by the solar cells 10 to generate sufficient electrical energy.

Figure 5 shows a third embodiment of the present invention. In figure 5 the liquid crystal display 5 is also shown in more detail. The liquid crystal display 5 according to figure 5 corresponds to the liquid crystal display 5 according to figure 2 with one exception, thereby same components beeing designated by the same numerals:
the solar cells 10 are also arranged on the rear side 50 of the second polarizing sheet 25 opposite to the surface 15 of the liquid crystal display 5. But in the embodiment according to figure 5 there is no partly reflecting transparent foil 40 arranged between the second polarizing sheet 25 and the solar cells 10. Instead of the partly reflecting transparent foil 40 the solar cells 10 are coated with a partly reflecting transparent coating 45 on a surface 55 of the solar cells 10 orientated to the surface 15 of the liquid crystal display 5. Thereby, the partly reflecting transparent coating 45 according to figure 5 has the same function as the partly reflecting transparent foil 40 according to figure 2.

The solar cells 10 can be constituted of mono-crystalline or multi-crystalline type silicon. Mono-crystalline or multi-crystalline type silicon is completely absorbing the light received by the solar cells 10.

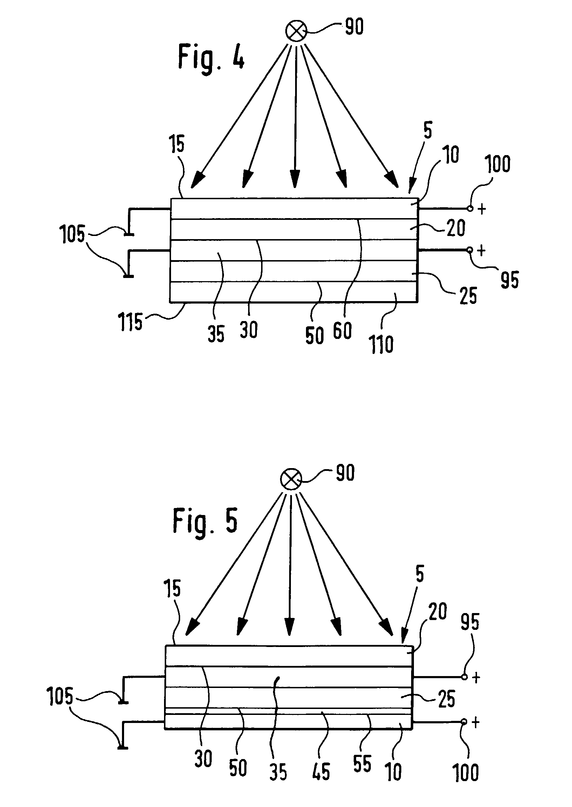

Alternatively, the solar cells 10 can be constituted of a partly transparent material, especially of amorpheous type silicon. If the solar cells 10 are constituted of a partly transparent material, they can either be arranged on the rear side 50 of the second polarizing sheet 25 opposite to the surface 15 of the liquid crystal display 5 according to figure 2 or figure 5 or they can be arranged at the surface 15 of the liquid crystal display 5 according to a second embodiment of the invention, shown in figure 4. If partly transparent solar cells 10 are used, the partly reflecting transparent foil 40 according to figure 2 or the partly reflecting transparent coating 45 on the surface 55 of the solar cells 10 according to figure 5 can be saved, because the legibility or the contrast of represented characters on the liquid crystal display 5 will not essentially be reduced by light absorption of the solar cells 10. Light entered into the liquid crystal display 5 at the solar cells 10 may therefore be reflected from a reflecting layer 110 at a back 115 opposite to the surface 15 of the liquid crystal display 5 according to figure 4.

The second embodiment of the invention according to figure 4 shows the liquid crystal display 5 also in greater detail where same components are designated by the same numerals as in figure 2 and figure 5. As already described, the liquid crystal display 5 comprises at its surface 15 the solar cells 10 and essentially parallel thereto, at a rear side 60 of the solar cells 10 and opposite to the surface 15 of the liquid crystal display 5, the first polarizing sheet 20. The second polarizing sheet 25 is arranged essentially parallel to the first polarizing sheet 20 at the rear side 30 of the first polarizing sheet 20 and opposite to the surface 15 of the liquid crystal display 5. The second polarizing sheet 25 thereby has also essentially orthogonal polarization direction in comparison with the polarization direction of the first polarizing sheet 20 as explained above according to figure 3. The liquid crystal display 5 comprises between the first polarizing sheet 20 and the second polarizing sheet 25 the layer 35 of liquid crystal elements. As explained above according to figure 3, the liquid crystal elements of the layer 35, where not excited by an electric field, are transparent and change the polarization direction of light passed through the first polarizing sheet 20 by about 90° such that the polarized light is passed through the second polarizing sheet 25 without essential light absorption. At the rear side 50 of the second polarizing sheet 25 opposite to the surface 15 of the liquid crystal display 5, the reflective layer 110 is arranged essentially parallel to the second polarizing sheet 25. The reflective layer 110 reflects the entering light to improve the contrast between the represented characters on the liquid crystal display 5 and the background of the representation by preventing further absorption of light, and therefore improves the legibility of the represented characters on the liquid crystal display 5.

It is also in the scope of the invention to provide a display according to the invention on any electrical device with a display, such as pocket calculators, measuring instruments, etc.

The invention is also not restricted to liquid crystal displays but concerns any display comprising solar cells 10, the solar cells 10 transforming light energy entering the display into electrical energy.

Especially the partly transparent solar cells may be used with any kind of display because it does not reduce essentially the light intensity received by the display and necessary for the legibility of the represented characters. Especially in the case of separate display illumination within the display or light emitting character representation on the display, the use of partly transparent solar cells at the surface of the display would not reduce essentially the contrast and the legibility of the represented characters on the background of the display. Especially in the case of light emitting character representation, also light absorbing solar cells may be used at the back of the display, thereby providing an improved contrast between the representation of characters and the background of the display. In this case, light emitting character representations will be contrasted by a black background.

## Claims

1. Electrical device (1), especially mobile phone, with a display (5), characterized in that the display (5) comprises solar cells (10) transforming light energy entering the display (5) into electrical energy.

2. Electrical device (1) according to claim 1, characterized in that the display (5) comprises at a surface (15) a first polarizing sheet (20) and essentially parallel thereto, on a rear side (30) of the first polarizing sheet (20) and opposite to the surface (15) of the display (5), a second polarizing sheet (25) with essentially orthogonal polarization direction in comparison with the polarization direction of the first polarizing sheet (20), the display (5) comprising between the first polarizing sheet (20) and the second polarizing sheet (25) a layer (35) of liquid crystal elements, the liquid crystal elements of the layer (35) when not excited by an electric field being transparent and changing the polarization direction of light passed through the first polarizing sheet (20), especially by about 90 degrees, such that the polarized light is passed through the second polarizing sheet (25) without essential light absorption, and the solar cells (10) being arranged on a rear side (50) of the second polarizing sheet (25) opposite to the surface (15) of the display (5).

3. Electrical device (1) according to claim 2, characterized in that a partly reflecting transparent foil (40) is arranged between the second polarizing sheet (25) and the solar cells (10).

4. Electrical device (1) according to claim 1, 2 or 3, characterized in that the solar cells (10) are coated with a partly reflecting transparent coating (45) on a surface (55) of the solar cells (10) orientated to the surface (15) of the display (5).

5. Electrical device (1) according to any one of claims 1 to 4, characterized in that the solar cells (10) are constituted of mono-crystalline or multicrystalline type silicon.

6. Electrical device (1) according to claim 1, characterized in that the display (5) comprises at a surface (15) the solar cells (10) and essentially parallel thereto, at a rear side (60) of the solar cells (10) and opposite to the surface (15) of the display (5), a first polarizing sheet (20), the display (5) comprising a second polarizing sheet (25), arranged essentially parallel to the first polarizing sheet (20), at a rear side (30) of the first polarizing sheet (20) and opposite to the surface (15) of the display (5), with essentially orthogonal polarization direction in comparison with the polarization direction of the first polarizing sheet (20), the display (5) comprising between the first polarizing sheet (20) and the second polarizing sheet (25) a layer (35) of liquid crystal elements, the liquid crystal elements of the layer (35) when not excited by an electric field being transparent and changing the polarization direction of light passed through the first polarizing sheet (20), especially by about 90 degrees, such that the polarized light is passed through the second polarizing sheet (25) without essential light absorption.

7. Electrical device (1) according to any one of the preceding claims, characterized in that the solar cells (10) are constituted of a partly transparent material, especially of amorphous type silicon.
